# DEMANDE DE BREVET EUROPEEN

(11) **EP 1 595 606 A1**
(43) Date de publication de la demande: **16.11.2005**
(21) Numéro de dépôt: 04360050.1
(22) Date de dépôt: 13.05.2004
(51) Int. Cl.: B08B 3/02, B60S 3/04

(54) **Lance de lavage à dispositif de commande intégré et système de lavage équipé d'une telle lance.**

(71) Demandeur: Financière Clairac, 75116 Paris (FR)
(72) Inventeur: Sarbach, Jean-Charles, 67700 Saverne (FR)
(74) Mandataire: Littolff, Denis

(57) **Abrégé**

Système de lavage à haute pression comportant une lance (4) manuportée projetant du fluide sous forme d'un jet sous pression, un dispositif de commande des différentes phases d'un cycle de lavage, un bloc technique (2) de production/distribution des liquides correspondant à chaque phase et un module de contôle dudit bloc technique. Ledit dispositif de commande du cycle est implanté dans la lance de lavage (4).

## Description

La présente invention concerne un système de lavage à haute pression comportant une lance manuportée projetant un fluide, dans la plupart des cas un liquide, sous forme d'un jet sous pression sur des objets à nettoyer. Ces objets sont en général des véhicules automobiles et, pour la commodité de la lecture, on se référera dans la suite surtout à cet exemple préférentiel.

De tels systèmes comportent également à titre principal un dispositif de commande pour la sélection de différentes phases d'un cycle de lavage, un bloc technique de production / distribution des liquides correspondant à chaque phase du cycle et un module de contrôle dudit bloc technique.

En général, ces systèmes sont implantés dans des centres de lavage dotés de pistes ou box parallèles constituant autant d'emplacements individualisés pour les véhicules. Lesdites pistes sont délimitées par des cloisons verticales de séparation qui confinent notamment les projections de liquide dans l'espace qu'elles enclosent, et participent secondairement à la récupération des liquides.

Dans chaque piste, la lance de lavage est disposée, lorsqu'elle n'est pas utilisée, dans un fourreau duquel elle peut être extraite pour asperger le véhicule. Cette lance équipe l'extrémité d'une tuyauterie souple véhiculant le liquide à projeter, dont l'autre extrémité est solidarisée à un support situé dans le box à un emplacement qui est en principe choisi pour permettre le nettoyage de toutes les faces du véhicule dans des conditions correctes. Ainsi, par exemple, ledit support peut être implanté centralement dans le plafond du box, et être par exemple rotatif de telle sorte que l'utilisateur puisse aisément contourner la voiture tout en actionnant la lance de lavage dont la tuyauterie suit alors ses déplacements.

Le dispositif de commande permet d'une part la mise en marche ou l'arrêt de la projection de liquide, et d'autre part la sélection d'un certain nombre de phases d'un cycle de lavage classique, et se trouve en général disposé sur l'une des parois du box. Un ou plusieurs boutons permettent le changement de phase, au gré de l'utilisateur. Cette disposition n'est cependant pas optimale, car elle génère une perte de temps en déplacement, puisqu'elle oblige l'utilisateur à revenir à proximité du sélecteur chaque fois qu'il envisage de changer de phase. En outre, pendant ce déplacement, la lance de lavage se trouve en général active, c'est-à-dire qu'elle projette du fluide sous pression, ce qui peut provoquer des désagréments : difficulté pour tenir la lance d'une seule main lorsque l'autre est occupée à procéder à la sélection, risque d'éclaboussures intempestives au cours des trajets, etc.

Au moment précis du changement de phase, l'une des mains de l'utilisateur est en effet occupée à manipuler le bouton de commande pour sélectionner une autre phase, laquelle peut impliquer une augmentation de la pression et, selon la position de la lance à ce moment (lance dirigée vers le sol) entraîner un risque pour l'utilisateur qui ne la tient plus que d'une seule main.

Dans certaines stations de lavage, l'utilisateur paye pour une durée prédéterminée au cours de laquelle il doit évaluer empiriquement les durées qu'il entend réserver aux différentes phases de lavage. Il n'y a pas de temps d'arrêt entre les phases, et le fait d'être obligé de revenir vers le dispositif de commande pour changer de phase ne va guère dans le sens d'une optimisation de la gestion desdites durées. Les dernières phases, en particulier, risquent d'être raccourcies au bénéfice des premières, ce qui nuit à l'efficacité globale de l'opération de lavage.

La présente invention a pour objectif de pallier ces inconvénients.

A cet effet, le système de lavage à haute pression de l'invention, également basé sur une lance manuportée projetant du fluide sous forme d'un jet sous pression, et comprenant en outre un dispositif de commande des différentes phases d'un cycle de lavage, un bloc technique de production / distribution des liquides correspondant à chaque phase et un module de contrôle dudit bloc, se caractérise à titre essentiel en ce que ledit dispositif de commande du cycle est implanté dans la lance de lavage.

Cette disposition originale permet de s'affranchir des inconvénients précités, puisque l'utilisateur peut à présent manipuler le dispositif de commande à l'endroit où il est, en conservant au surplus ses deux mains au contact de la lance de lavage. A l'emplacement même où il choisit de changer de phase dans le cycle de lavage, après avoir terminé de couvrir la totalité de son véhicule avec la phase précédente, il peut instantanément télécommander le passage à la phase suivante. Quelle que soit la position de la lance, et nonobstant un possible changement de pression dans le sens d'une augmentation, l'utilisateur peut en permanence fermement tenir la lance dans ses mains, et éviter ainsi tout accident. L'efficacité et la sécurité du système s'en trouvent sensiblement améliorées.

La lance de l'invention comporte de préférence un émetteur, lequel est couplé à un récepteur disposé fixe, par exemple sur l'une des parois du box, et transmettant les informations envoyées par l'émetteur au module de contrôle du bloc technique. Dans cette configuration, le dispositif de commande n'est par conséquent pas dépendant d'une quelconque filerie, qui compliquerait bien évidemment sa liaison avec des éléments fixes du système.

Pour que l'utilisateur puisse vérifier et valider ses choix, de préférence, le système comporte en outre des moyens d'affichage de la phase du cycle sélectionnée par le dispositif de commande. Selon une configuration possible, des voyants lumineux reflétant ladite phase sont prévus dans un boîtier disposé fixe, par exemple sur une paroi de chaque box.

Pour éviter toute connexion qui obérerait les avantages procurés par l'invention, il convient également que le dispositif de commande intégré à la lance soit autonome. Son alimentation est à cet effet directement implantée dans ladite lance. Plus précisément, compte tenu de la configuration et de l'espace nécessairement réduit qui est dévolu audit dispositif, ladite alimentation peut être une pile de petites dimensions, par exemple extra plate. L'un des objectifs de l'invention est en effet d'accroître le confort d'utilisation de la lance, notamment en y intégrant ledit dispositif de commande, sans pour autant augmenter de manière sensible son volume ou son poids, ce qui risquerait de rendre sa manipulation plus délicate et nuirait par conséquent à l'objectif recherché.

Alternativement à une pile, l'alimentation de l'émetteur peut être obtenue, au moment de l'actionnement du dispositif de commande, via un dispositif piézoélectrique.

Cette solution présente l'avantage de n'exiger aucun changement périodique, donc aucune opération de maintenance, comme c'est à l'inverse le cas lorsque l'alimentation est assurée par une pile.

La transmission des données entre l'émetteur et le récepteur peut par exemple être réalisée au moyen d'émissions de signaux infrarouges ou radiofréquences. Compte tenu des contraintes techniques relativement peu exigeantes dans l'environnement d'une station de lavage, et notamment de la proximité émetteur / récepteur, la conception de ces derniers ne pose pas de problème particulier.

Le dispositif de commande intégré à la lance doit de préférence réaliser la totalité des fonctions permises par le système de lavage de l'invention. En particulier, il doit comporter au moins un organe permettant la sélection d'un des états marche / arrêt, et d'un parmi une pluralité de modes comportant au moins le lavage, le rinçage et la finition.

Selon une possibilité, le dispositif de commande peut comporter un ou deux boutons pour la commande des états marche / arrêt et deux boutons permettant respectivement de faire défiler et de valider les modes.

Additionnellement, des positions / organes de commande supplémentaires peuvent être ajoutés, pour correspondre à des phases supplémentaires de type prélavage, introduction de mousse active, séchage, lustrage, etc.

Ainsi, selon une possibilité, le bloc technique de production / distribution de fluide peut produire un liquide contenant de la cire lustrante, utilisée en phase de finition, ou d'autres types de liquides ayant d'autres fonctions susceptibles d'être utilisées dans un programme de lavage.

Pour accroître la sécurité, on peut prévoir que le système de l'invention comporte des moyens de détection de la préhension de la lance par l'utilisateur, disposés à proximité du dispositif de commande, et couplés à la commande des états marche / arrêt.

Si la lance de lavage échappe malencontreusement des mains de l'utilisateur, le système est immédiatement arrêté.

De préférence, lesdits moyens de détection de la préhension consistent en au moins un capteur capacitif.

Selon l'invention, le module de contrôle peut également assurer un réglage automatique de la pression du liquide en fonction de la phase du cycle sélectionné via le dispositif de commande. La possibilité de commande depuis la lance, permettant de conserver ses deux mains sur celle-ci, peut alors être considérée comme un avantage substantiel, car améliorant la sécurité d'utilisation en cas d'augmentation de la pression.

Additionnellement, un réglage du niveau de pression du liquide depuis la lance, au moyen du dispositif de commande, peut également être assuré.

Outre son application au lavage de véhicule dans les systèmes précités, l'invention concerne également des lances de lavage du type lance de nettoyeur à haute pression et lance d'arrosage, par exemple pour gazon, courts de tennis, caractérisée en ce qu'elle comporte un dispositif de commande.

L'invention va à présent être décrite plus en détail, en référence aux figures annexées, pour lesquelles :
- la figure 1 montre une vue en perspective de stations de lavage automatisées comportant plusieurs pistes individualisées dans laquelle l'invention peut être implantée ; et
- la figure 2 représente une configuration possible de la présente invention.

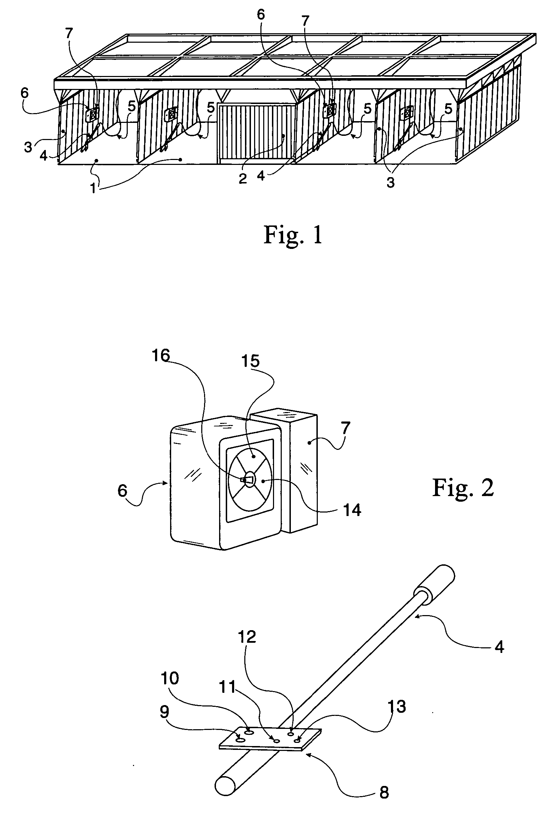

En référence à la figure 1, la station de lavage automatisée de véhicules se compose en l'espèce de quatre pistes (1) séparées en deux groupes de deux box individualisés disposés de part et d'autre d'un bloc technique (2) central. Chaque piste ou box (1) individualisé est séparé de la piste adjacente, ou de l'extérieur de la station de lavage, par une paroi (3) à proximité de laquelle est disposée une lance de lavage (4) qui est disposée, au repos, dans un fourreau. Cette lance (4) équipe l'extrémité d'un tuyau (5) flexible dont l'autre extrémité est reliée à un support mobile en rotation (non représenté) disposé au plafond de chaque box individualisé (1), ledit support reliant le tuyau flexible (5) à une tubulure véhiculant les liquides utilisés dans chaque phase de lavage, et provenant par exemple du bloc technique (2).

Une paroi (3) de chaque box (1) est en outre équipée de deux boîtiers contigus (6) et (7) dont le fonctionnement est examiné en référence à la figure 2.

La lance de lavage (4) comporte une platine (8) équipée d'un certain nombre d'organes de commande. Cette platine est également dotée d'un émetteur permettant l'envoi d'informations sur l'état et/ou l'action exercée sur chaque organe de commande. Ainsi, par exemple, le bouton référencé (9) entraîne, lorsqu'il est actionné, l'arrêt de la lance. Le bouton (10) permet à l'inverse sa mise en marche.

Le bouton (11) contrôle la commande de la position de lavage, alors que le bouton (12) décide du passage au rinçage. Enfin, le bouton (13) permet la commande de la position finition.

Le signal véhiculant les données reflétant un changement d'état de l'un des boutons est envoyé à un récepteur (7) disposé comme on l'a vu sur une paroi de chaque box. Il est à noter qu'un seul récepteur, par exemple situé dans le local technique (2) et susceptible de reconnaître la lance actionnée, peut représenter une solution alternative techniquement intéressante.

Ce récepteur transmet l'information d'une part au boîtier (6), et d'autre part au module de contrôle attaché au centre de lavage. Ce boîtier (6) reflète le choix fait par l'utilisateur sur la platine (8), et indique par conséquent à l'aide de voyants l'organe de commande qui a été actionné. Dans l'exemple utilisé à la figure 2, le boîtier (6) présente, sur sa face orientée vers l'intérieur du box, l'effigie d'un cercle divisé en portions angulaires de couleurs différentes, chacune correspondant à une phase du processus de lavage. Ainsi, le voyant (14) peut par exemple correspondre à la position de lavage, alors que le voyant (15) reflète la position de rinçage, et le voyant (16) indique à l'utilisateur qu'il est en phase de finition. D'autres voyants peuvent être ajoutés en augmentant le nombre de secteurs angulaires, ou à l'extérieur de cercle.

La lance télécommandée de l'invention est susceptible de fonctionner dans tous types de centre de lavage, puisqu'elle ne dépend pas de la structure dudit centre. Elle a notamment également vocation à s'appliquer à des configurations dans lesquelles la production / distribution de fluide n'est pas centralisée.

## Revendications

1. Système de lavage à haute pression comportant une lance manuportée projetant du fluide sous forme d'un jet sous pression, un dispositif de commande des différentes phases d'un cycle de lavage, un bloc technique de production / distribution des liquides correspondant à chaque phase et un module de contrôle dudit bloc technique, **caractérisé en ce que** ledit dispositif de commande du cycle est implanté dans la lance de lavage.

2. Système de lavage à haute pression selon la revendication précédente, **caractérisé en ce que** la lance comporte un émetteur couplé à un récepteur disposé fixe et transmettant les informations envoyées par l'émetteur au module de contrôle du bloc technique.

3. Système de lavage à haute pression selon l'une quelconque des revendications précédentes, **caractérisé en ce qu'**il comporte des moyens d'affichage de la phase du cycle sélectionnée par le dispositif de commande.

4. Système de lavage à haute pression selon la revendication précédente, **caractérisé en ce que** lesdits moyens d'affichage consistent en des voyants lumineux reflétant la phase du cycle sélectionnée, lesdits voyants étant disposés dans un boîtier fixe.

5. Système de lavage à haute pression selon l'une quelconque des revendications précédentes, **caractérisé en ce que** l'alimentation du dispositif de commande est intégrée dans la lance.

6. Système de lavage à haute pression selon la revendication précédente, **caractérisé en ce que** ladite alimentation est une pile de petites dimensions.

7. Système de lavage à haute pression selon la revendication 5, **caractérisé en ce que** l'alimentation est obtenue, au moment de l'actionnement du dispositif de commande, via un dispositif piézoélectrique.

8. Système de lavage à haute pression selon l'une quelconque des revendications 2 à 7, **caractérisé en ce que** la transmission des données entre l'émetteur et le récepteur est réalisée au moyen d'émissions de signaux infrarouges ou radiofréquences.

9. Système de lavage à haute pression selon l'une quelconque des revendications précédentes, **caractérisé en ce que** le dispositif de commande comporte au moins un organe permettant la sélection d'un des états marche / arrêt, et d'un parmi une pluralité de modes comportant au moins le lavage, le rinçage et la finition.

10. Système de lavage à haute pression selon la revendication précédente, **caractérisé en ce que** le dispositif de commande comporte un ou deux boutons pour la commande des états marche / arrêt et deux boutons permettant respectivement de faire défiler et de valider les modes.

11. Système de lavage à haute pression selon l'une quelconque des revendications précédentes, **caractérisé en ce qu'**il comporte des moyens de détection de la préhension de la lance par l'utilisateur, disposés à proximité du dispositif de commande, et couplés à la commande des états marche / arrêt.

12. Système de lavage à haute pression selon la revendication précédente, **caractérisé en ce que** les moyens de détection de la préhension consistent en au moins un capteur capacitif.

13. Système de lavage à haute pression selon l'une quelconque des revendications précédentes, **caractérisé en ce que** le module de contrôle assure un réglage automatique de la pression du liquide en fonction de la phase du cycle sélectionnée via le dispositif de commande.

14. Système de lavage à haute pression selon l'une quelconque des revendications précédentes, **caractérisé en ce que** le niveau de pression est réglable depuis la lance au moyen du dispositif de commande.

15. Lance de lavage du type lance de nettoyeur à haute pression et lance d'arrosage, par exemple pour gazon, courts de tennis, **caractérisée en ce qu'**elle comporte un dispositif de commande.
